# EUROPEAN PATENT SPECIFICATION

(11) **EP 3 727 002 B1**
(45) Date of publication and mention of the grant of the patent: **09.10.2024**
(21) Application number: 18825718.2
(22) Date of filing: 21.12.2018
(51) Int. Cl.: A23L 29/00, A23L 29/30, A23L 29/20, A23C 11/10, A23L 9/20

(54) **CREAMER COMPOSITION**
KAFFEWEISSER ZUSAMMENSETZUNG
COMPOSITION DE COLORANT À CAFÉ

(30) Priority: 22.12.2017 EP 17209943
(43) Date of publication of application: 28.10.2020
(73) Proprietor: Société des Produits Nestlé S.A., 1800 Vevey (CH)
(72) Inventor: WAKSMAN, Lucile, 269678 Singapore (SG); TERRAZAS, Korina, 3510 Konolfingen (CH); WIDMER, Christoph, 3122 Kehrsatz (CH); PEPE, Francesca, 3007 Bern (CH); DES CHAMPS DE BOISHEBERT, Virgninie Marie G. C., 3007 Bern (CH)
(74) Representative: Ducreux, Marie
(86) International application number: PCT/EP2018/086603
(87) International publication number: WO 2019/122336

(56) References cited:
- EP-B1- 2 882 298
- WO-A1-01/08507
- WO-A1-2014/023805
- WO-A1-2017/134253
- WO-A2-03/059778
- WO-A2-2010/040727
- US-A- 4 415 600
- US-A1- 2002 037 353
- US-B1- 6 168 819
- US-B1- 6 180 159
- US-B1- 6 287 616
- US-B1- 6 426 110

## Description

### Field of the invention

The present invention relates to a powdered creamer composition comprising plant protein, sodium bicarbonate and citric acid.

### Background

Creamers are widely used as whitening agents and texture/mouthfeel modifiers with hot and cold beverages, e.g., coffee, cocoa, tea, etc. They are commonly used as an alternative to milk or dairy cream. Creamers may come in a variety of different flavours and provide a whitening effect, mouthfeel, body, and a smoother texture, and may be in powdered or in liquid form.

More and more consumers are concerned by additives that may be perceived as synthetic or artificial in food products. Thus, there is a demand for commercially available creamers without such additives. Usually, creamers contain stabilizers such as hydrocolloids, buffers salts, synthetic emulsifiers or whitening agents that are often not perceived as natural by the consumers. These perceived artificial food ingredients, however, are typically needed to guarantee the physical stability of the creamer after pouring into coffee or other beverages. In addition they are needed to achieve the desired whitening and texture/mouthfeel effect in the beverage. In the absence of these ingredients, the coffee creamers are much less stable and show less whitening and adverse sensorial effects. In addition, without the presence of synthetic or artificial additives, severe physical destabilization of the creamers and loss of functionality can occur in the finished beverages.

Most dairy, non-dairy and plant based creamers experience physical separation in low pH and high mineral content beverages without the presence of buffers such as phosphates and/or hydrocolloids. The physical separation is often referred to as flocculation, curdling, clumping, aggregation or sedimentation. This phenomenon is related first to the discharge of emulsion droplets then the aggregation of the droplets. For a creamer to perform well in a beverage, the emulsion should be stable and free of aggregates or clumps when added to the beverage and until the beverage is completely consumed. It should provide good sensorial properties without any physical instability when added to beverages. WO2010040727 discloses low protein and protein-free creamer compositions, and processes for making them. The creamer composition includes an emulsifying component of at least one emulsifier; a buffer system of at least one buffering agent; and a chelating system of at least one chelating agent of an organic acid or organic acid salt. The creamer optionally contains a whitening agent in an amount sufficient to provide additional whitening to an aqueous media to which the creamer is added. The composition has a fat or oil content of about 0.5% to about 50% by weight and a protein content of no more than 3% by weight. The creamer composition can be in the form of liquid, liquid concentrate or powder, and provides high whitening capacity and a pleasant mouth-feel with no discernable feathering or fat separation when added to aqueous media of beverages at different pHs, hardnesses and temperatures

### Summary of the invention

The inventors have surprisingly found that a powdered creamer which is stable when added to a beverage and with good sensorial properties and whitening capacity without the addition of artificial additives, can be obtained by adding baking soda (sodium bicarbonate) to a creamer composition comprising plant protein and vegetable oil. Accordingly, the invention relates to a powdered creamer composition comprising 1-8% by weight of plant protein; 12-50% by weight of vegetable oil; 25-80 % by weight of carbohydrate; 0.5-5% by weight of sodium bicarbonate; 0.2-3% by weight of citric acid; and wherein the plant protein has a median molecular weight comprised in the range of between 800 and 20,000 Daltons. In further embodiments, the invention relates to a coffee or tea beverage composition, a beverage capsule, and a method of producing a powdered creamer composition.

### Brief description of the Figures

Figure 1 shows the fat droplet distribution obtained with powdered creamer according to the present invention having good emulsification properties.
Figure 2 shows the fat droplet distribution obtained with powdered creamer having bad emulsification properties.

### Detailed description of the invention

Plant protein according to the invention may be any protein suitable for human consumption derived from plant material. Plant protein according to the invention can advantageously replace dairy-based proteins in powdered coffee creamers while preserving good sensorial properties and avoiding any physical instability when added to beverages. It was expected that the ability of plant protein to avoid flocculation, curdling or clumping of the powdered creamer would differ from the ability of dairy-based proteins, e.g. sodium caseinate. The inventors have actually observed that not all native, or even partially hydrolysed, plant proteins can efficiently stabilize an oil-in-water emulsion, thereby avoiding flocculation, curdling, clumping or aggregation of the claimed powdered creamer upon reconstitution in liquid, such as coffee.

Preferred plant proteins are soy protein, rice protein, pea protein, chickpea protein, potato protein, canola protein, hemp protein, oat protein, flaxseed protein, fava bean protein, lentil protein, and combinations thereof. The protein may be in any suitable form, e.g. in a purified form, e.g. as protein isolate or protein powder, or it may be in the form of plant ingredients comprising protein as well as other compounds such as carbohydrate and/or oil, e.g. in the form of flour such as rice flour, corn flour, tapioca flour or oat flour, or crushed or milled plant parts, e.g. nuts, almonds, soy beans, oat, quinoa, hemp and pea and any combinations thereof. The plant protein is present in the powdered creamer composition in an amount of 1-8% by weight, preferably 1-5%, more preferably 1.5-4%.

The plant protein of the present invention has a median molecular weight comprised in the range of between 800 and 20,000 Daltons (Da). The inventors first observed that, at the same concentration, plant protein were less effective in stabilizing emulsion than sodium caseinate. The inventors have surprisingly found that plant protein having a median molecular weight comprised in the range of between 800 and 20,000 Da have improved ability to stabilze the emulsion, thereby avoiding flocculation, curdling, clumping or aggregation of the claimed powdered creamer upon reconstitution in liquid, such as coffee. Without to be bound by the theory, a plant protein having a median molecular weight in the claimed range may be less susceptible to protein aggregation, thereby preserving stability of the emulsion by, for example, avoiding oil droplet aggregation.

In one embodiment, the plant protein has a median molecular weight comprised in the range of between 850 and 20,000 Da, or in the range between 900 and 20,000 Da, or in the range between 950 and 20,000 Da. In another embodiment, the plant protein has a median molecular weight comprised in the range of between 850 and 15,000 Da, or in the range between 850 and 12,000 Da, or in the range of between 850 and 11,000 Da. In a further embodiment, the plant protein has a median molecular weight comprised in the range of between 900 and 15,000 Da, or in the range of between 900 and 12,000 Da, or in the range of between 900 and 11,000 Da. In yet another embodiment, the plant protein has a median molecular weight comprised in the range of between 950 and 15,000 Da, or in the range between 950 and 12,000 Da, or in the range of between 950 and 11,000 Da.

The plant protein may have been subjected to any suitable pre-treatment, e.g. to increase the solubility. For example, the plant protein may have been partially hydrolysed by any suitable method known in the art, such as e.g. acid hydrolysis and/or enzymatic hydrolysis.The plant protein can be hydrolysed using any suitable enzymes, adapted to the nature of the plant protein and under conditions well known in the art. Upon enzymatic hydrolysis, the protein is cleaved, resulting in a mixture of polypeptides, oligopeptides and free amino acids. The extent of protein hydrolysis is determined using the Kjedahl method, a worldwide recognised standard method for determining the protein content. In short, the extent of protein hydrolysis is determined using the ratio (NPN/TN %) between Non Protein Nitrogen (NPN) and Total Nitrogen (TN). NPN contains the peptides resulting from hydrolysis and reflects the nitrogen coming from nitrogenous compounds such as peptides or free amino acids. The NPN fraction is obtained by acid precipitation of proteins. Therefore, the highest is the value of the NPN/TN ratio, the higher is the extent of protein hydrolysis.

In one embodiment of the invention, the plant protein has been hydrolysed to an extent of protein hydrolysis comprised in the range of between 5 to 99%. In another embodiment of the invention, the plant protein has been hydrolysed to an extent of hydrolysis comprised in the range of between 5 to 90%, in the range of between 5 to 80%, or in the range of between 5 to 70%, or in the range between 5 to 60%. In another embodiment of the invention, the plant protein has been hydrolysed to an extent of protein hydrolysis comprised in the range of between 6 to 90%, or in the range of between 6 to 80%, or in the range of between 6 to 60%, or in the range of between 6 to 55%, or in the range of between 5 to 58%, or in the range of between 5 to 55%, or in the range of between 6 to 58%, or in the range of between 6 to 55% or in the range of between 7 to 58%, or in the range of between 7 to 55%, or in the range of between 7 to 53%.

In one embodiment of the invention, the powdered creamer composition is substantially devoid of milk protein. It was expected that the replacement of milk protein by plant protein would have a detrimental impact on the creamer sensory properties and stability after reconstitution. The powdered creamer composition of the present invention has the advantage of being substantially devoid of milk protein while still demonstrating good sensorial properties without any physical instability when added to beverages.

Vegetable oil according to the invention may be any oil suitable for human consumption derived from plant material. Preferred vegetable oils are coconut oil, palm kernel oil or oleins, soy oil, e.g. high oleic-low linolenic soy oil, sunflower oil, e.g. high oleic sunflower oil, algal oil, rice bran oil, almond oil, oil from nuts, canola oil, safflower oil, cotton seed oil, and corn oil and any combination thereof, as blend or interesterified. The oil may be in hydrogenated form or in non-hydrogenated form. The vegetable oil may be in any suitable form, e.g. in a purified form as oil, or it may be in the form of plant ingredients comprising oil as well as other compounds such as carbohydrate and/or protein, e.g. in the form of flour such as rice flour, corn flour, tapioca flour, coconut flour, palm kernel or oat flour, or crushed or milled plant parts, e.g. nuts, almonds, soy beans, oat, quinoa, hemp and pea and any combinations thereof. The vegetable oil is present in the powdered creamer composition in an amount of 12-50% by weight, preferably 20-45%, more preferably 25-40%.

Carbohydrate according to the invention may be any carbohydrate suitable for human consumption. Carbohydrate may be present in a pure form, or it may e.g. be in the form of plant ingredients comprising carbohydrate as well as other compounds such as protein and/or oil, e.g. in the form of flour such as rice flour, corn flour, tapioca flour, coconut flour, palm kernel flour, or oat flour, or crushed or milled plant parts, e.g. nuts, almonds, soy beans, oat, quinoa, hemp and pea and any combinations thereof. In a preferred embodiment, the carbohydrate is, in total or in part, in the form of sugar. Preferred sugars are sucrose, fructose, lactose, glucose syrup, corn syrup, rice syrup, tapioca syrup, maple syrup, agave syrup, honey, dextrin, oligosaccharides, and combinations thereof. The carbohydrate is present in the powdered creamer composition in an amount of 25-80% by weight, preferably 40-75%, more preferably 50-70%.

In one embodiment of the invention, the protein, carbohydrate and/or vegetable oil is, totally or in part, in the form of vegetable flour and/or in the form of milled or crushed plant parts. Vegetable flour according to the invention may e.g. be rice flour, corn flour, tapioca flour, coconut flour, palm kernel flour, oat flour, and combinations thereof. Crushed or milled plant parts may e.g. be crushed or milled nuts, almonds, soy beans, oat, quinoa, hemp, pea, lentils, and any combinations thereof.

The powdered creamer composition of the invention comprises sodium bicarbonate in an amount of 0.5-5% by weight, preferably 0.7-3%. Sodium bicarbonate may be in any form suitable for human consumption, e.g. in the form of baking soda.

In one embodiment of the invention, the powdered creamer composition comprises citric acid in an amount of 0.2-3% by weight, preferably 0.4-1.5%. Citric acid may be in any suitable form, e.g. in the form of citrate, such as e.g. Citric acid may be present in pure form or it may, totally or in part, e.g. be in the form of a fruit derived composition, e.g. fruit juice (e.g. fruit juice concentrate), comprising citric acid. In a preferred embodiment, citric acid is present, totally or in part, in the form of lemon juice, e.g. as lemon juice concentrate.

In one embodiment of the invention, the powdered creamer composition comprises calcium carbonate in an amount of 1-7% by weight, such as in an amount of 1-6% by weight, 1-5% by weight or in an amount of 2-7% by weight, or in an amount of 2-6% by weight, or, in an amount of 2-5% by weight, or in an amount of 2-4% by weight, or in an amount of 3-7% by weight, or in an amount of 3-6% by weight, or in an amount of 3-5% by weight, or in an amount of 3-4% by weight. Calcium carbonate may be in any form suitable for human consumption, e.g. in the form of powder. Addition of calcium carbonate improves the whitening properties of the powdered creamer according to the invention.

In a further embodiment, the powdered creamer composition comprises on or more emulsifiers. Suitable emulsifiers are e.g. lecithin (as such or hydrolysed), peptides (e.g. peptides from plant protein), quillaja extract, monoglycerides, succinic acid esters of monoglycerides, and diacetyl tartaric acid esters of monoglycerides. A preferred emulsifier is lecithin. Lecithin is generally well accepted by consumers.

The powdered creamer composition of the invention may comprise other ingredients suitable for use in a powdered creamer composition, such as e.g. flavours, whitening agents, texturizing agents and/or foaming agents

The powdered creamer composition of the invention is preferably devoid of added phosphates. By added phosphates are meant phosphates which are added as substantially pure compounds, e.g. to obtain a buffering effect and/or for the purpose of stabilising the creamer composition. The term "added phosphates" is not meant to include phosphates present in minor amounts as natural constituents of other ingredients of the creamer composition, e.g. phosphates that may naturally be present in vegetable material added to provide plant protein, vegetable oil and/or carbohydrate to the creamer composition, e.g. flour, such as rice flour or oat flour, or crushed or milled plant parts, e.g. nuts.

In another preferred embodiment, the powdered creamer composition is substantially devoid of milk protein. By substantially devoid of milk protein is meant that no milk protein is added as such to the composition, and that any milk protein present originates from minor traces or impurities present in other ingredients, e.g. traces of milk protein present in lactose preparations or preparations of plant proteins. In one embodiment, the powdered creamer composition comprises less than 0.1% milk protein by weight, such as less than 0.01% milk protein.

The powdered creamer composition of the invention may be a foaming creamer, i.e. a creamer that produces foam when dissolved in a liquid. Foaming creamers and methods for producing them are well known in the art. A foaming creamer may e.g. be a powdered creamer composition wherein the creamer powder particles are porous and gas is released from the pores upon dissolution to produce foam.

The invention further relates to a powdered coffee or tea beverage composition comprising soluble coffee or tea and a powdered creamer composition according to the invention. By a powdered coffee or tea beverage composition is meant a powdered composition suitable for providing a coffee or tea beverage by dissolution in a liquid, preferably water, such as instant coffee or instant tea. Powdered coffee or tea beverage compositions comprising soluble coffee or tea in combination with powdered creamer are well known in the art. Powdered coffee or tea beverages may further comprise sweeteners, e.g. sugar, and flavours. In a preferred embodiment, the invention relates to a powdered coffee beverage comprising soluble coffee and a powdered creamer composition according to the invention. In another preferred embodiment, the invention relates to a powdered tea beverage comprising soluble tea and a powdered creamer composition according to the invention.

In a further aspect the invention relates to a beverage capsule for a beverage preparation apparatus, the beverage capsule comprising the powdered creamer composition of the invention. Beverage capsules are well known in the art, and any suitable capsule construction may be used. Suitable capsules are e.g. disclosed in WO03059778 and EP 0512468. The construction of the capsule will depend on the particular beverage machine(s) for which is intended to be used. Several such beverage machines adapted to the preparation of beverages from capsules exists and are well known in the art. The beverage capsule comprises a chamber wherein the powdered creamer composition of the invention is present. The chamber may be hermetically sealed or it may be partly open to the environment. Beverage capsules are constructed such that water, or another suitable liquid, can be injected into the chamber where the powdered creamer composition of the invention is present so that the powdered creamer composition is dissolved when a beverage is prepared from the capsule in a beverage preparation apparatus. The liquid with dissolved creamer is lead from the capsule into a cup or other suitable container. The capsule may comprise additional beverage ingredients depending on the beverage to be prepared, e.g. soluble coffee or roast and ground coffee. In one embodiment, the invention relates to a beverage capsule for a beverage preparation apparatus, the invention relates to a beverage capsule comprising the powdered coffee or tea beverage composition of the invention.

In a preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid;
- 1-7% by weight of calcium carbonate; and
wherein the plant protein has a median molecular weight comprised in the range of between 800 and 20,000 Daltons.

In a further preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid;
- 1-7% by weight of calcium carbonate; and
- 0.1-5% by weight of lecithin, and wherein the plant protein has a median molecular weight comprised in the range of between 800 and 20,000 Daltons.

In another preferred embodiment, the invention relates to a powdered creamer composition substantially devoid of milk protein, comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 900 and 15,000 Daltons.

In yet another preferred embodiment, the invention relates to a powdered creamer composition substantially devoid of milk protein, comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 900 and 12,000 Daltons.

In another preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid;
- 1-7% by weight of calcium carbonate;
- 0.1-5% by weight of lecithin, and
wherein the plant protein has a median molecular weight comprised in the range of between 900 and 12,000 Daltons.

In another preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 800 and 20,000 Daltons and has been hydrolysed to an extent of protein hydrolysis comprised in the range of between 5% and 99%.

In another preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 800 and 20,000 Daltons and has been hydrolysed to an extent of protein hydrolysis comprised in the range of between 5% and 60%.

In a further preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 900 and 12,000 Daltons and has been hydrolysed to an extent of protein hydrolysis comprised in the range of between 5% and 99%.

In yet another preferred embodiment, the invention relates to a powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 900 and 12,000 Daltons and has been hydrolysed to an extent of protein hydrolysis comprised in the range of between 5% and 60%.

### Method

In one embodiment the present invention relates to a method of preparing a powdered creamer composition, the method comprising: a) preparing an aqueous solution comprising plant protein; b) emulsifying a vegetable oil in the aqueous solution to obtain an emulsion; and c) drying the emulsion to obtain a powdered creamer composition; wherein carbohydrate and sodium bicarbonate is added to the aqueous solution prepared in step a) and/or to the emulsion obtained in step b), before step c); and wherein the plant proteins, vegetable oil, carbohydrate and bicarbonate are present in amounts to obtain a powdered creamer composition comprising:
- 1-8% by weight of plant protein;
- 12-50% dry weight of vegetable oil;
- 25-80 % dry weight of carbohydrate;
- 0.5-5% dry weight of sodium bicarbonate;
- 0.2-3% by weight of citric acid; and
wherein the plant protein has a median molecular weight comprised in the range of between 800 and 20,000 Daltons.

In one embodiment, the method relates to a method of producing a powdered creamer composition according to the invention.

In step a) of the method an aqueous solution comprising plant protein is prepared. This may be performed in any suitable way, and ways of preparing aqueous solution of plant protein for the purpose of preparing emulsions are well known in the art. Plant proteins are dispersed in an aqueous liquid, e.g. water, and allowed to hydrate and dissolve. To facilitate hydration and dissolution, the dispersion may be performed at elevated temperature and suitable mixing devices may be used. The process may be adopted based on the specific characteristics of the protein to be dissolved. Other water soluble ingredients, e.g. carbohydrate, sodium bicarbonate, citric acid, calcium carbonate and/or water soluble emulsifiers, may be added to the aqueous solution at this stage, either before, during, or after the additional of plant protein.

In step b) of the method, a vegetable oil is emulsified in the aqueous solution obtained in step. Oil soluble ingredients, e.g. oil soluble emulsifiers, may be mixed with the oil before emulsification. Emulsification may be performed by any suitable method, e.g. using mixing and homogenisation methods well known in the art.

The plant proteins, vegetable oil, carbohydrate, bicarbonate, and any other ingredients are added in amounts to obtain a powdered creamer composition with the desired composition, as described in this specification.

In step c) of the method, the emulsion is dried to provide a powdered creamer composition. Drying may be performed by any suitable method, e.g. spray drying, roller drying, freeze drying, or the like.

In one embodiment of the invention, the method comprises mixing a gas into the liquid emulsion shortly before spray drying to produce a porous creamer powder. Any suitable gas may be used, such as e.g. nitrogen or carbon dioxide.

In a preferred embodiment, the inventions relates to a method of preparing a powdered creamer composition, the method comprising:
a) preparing an aqueous solution comprising plant protein;
b) emulsifying a vegetable oil in the aqueous solution to obtain an emulsion; and
c) drying the emulsion to obtain a powdered creamer composition;
   wherein carbohydrate, sodium bicarbonate and citric acid are added to the aqueous solution prepared in step a) and/or to the emulsion obtained in step b), before step c); and
   wherein the plant proteins, vegetable oil, carbohydrate,bicarbonate and citric acid are present in amounts to obtain a powdered creamer composition comprising:
      - 1-8% by weight of plant protein;
      - 12-50% dry weight of vegetable oil;
      - 25-80 % dry weight of carbohydrate;
      - 0.5-5% dry weight of sodium bicarbonate;
      - 0.2-3% by weight of citric acid;
      - 1-7% by weight of calcium carbonate; and
   wherein the plant protein has a median molecular weight comprised in the range of between 800 and 20,000 Daltons.

In another preferred embodiment, the inventions relates to a method of preparing a powdered creamer composition, the method comprising:
a) preparing an aqueous solution comprising plant protein;
b) emulsifying a vegetable oil in the aqueous solution to obtain an emulsion; and
c) drying the emulsion to obtain a powdered creamer composition;
   wherein carbohydrate, sodium bicarbonate and citric acid are added to the aqueous solution prepared in step a) and/or to the emulsion obtained in step b), before step c); and
   wherein the plant proteins, vegetable oil, carbohydrate bicarbonate and citric acid are present in amounts to obtain a powdered creamer composition comprising:
      - 1-8% by weight of plant protein;
      - 12-50% dry weight of vegetable oil;
      - 25-80 % dry weight of carbohydrate;
      - 0.5-5% dry weight of sodium bicarbonate;
      - 0.2-3% by weight of citric acid;
      - 0.1-5% by weight of lecithin; and
   wherein the plant protein has a median molecular weight comprised in the range of between 800 and 20,000 Daltons.

In yet a further preferred embodiment, the inventions relates to a method of preparing a powdered creamer composition of the invention, the method comprising:
a) preparing an aqueous solution comprising plant protein;
b) emulsifying a vegetable oil in the aqueous solution to obtain an emulsion; and
c) drying the emulsion to obtain a powdered creamer composition;
   wherein carbohydrate, sodium bicarbonate and citric acid are added to the aqueous solution prepared in step a) and/or to the emulsion obtained in step b), before step c); and
   wherein the plant proteins, vegetable oil, carbohydrate and bicarbonate are present in amounts to obtain a powdered creamer composition comprising:
      - 1-8% by weight of plant protein;
      - 12-50% dry weight of vegetable oil;
      - 25-80 % dry weight of carbohydrate;
      - 0.5-5% dry weight of sodium bicarbonate;
      - 0.2-3% by weight of citric acid; and
   wherein the plant protein has a median molecular weight comprised in the range of between 800 and 20,000 Daltons and wherein the plant protein has been hydrolysed to an extent of protein hydrolysis comprised in the range of between 5 to 99%.

In another preferred embodiment, the inventions relates to a method of preparing a powdered creamer composition of the invention, the method comprising:
a) preparing an aqueous solution comprising plant protein;
b) emulsifying a vegetable oil in the aqueous solution to obtain an emulsion; and
c) drying the emulsion to obtain a powdered creamer composition;
   wherein carbohydrate,sodium bicarbonate and citric acid are added to the aqueous solution prepared in step a) and/or to the emulsion obtained in step b), before step c); and
   wherein the plant proteins, vegetable oil, carbohydrate and bicarbonate are present in amounts to obtain a powdered creamer composition comprising:
      - 1-8% by weight of plant protein;
      - 12-50% dry weight of vegetable oil;
      - 25-80 % dry weight of carbohydrate;
      - 0.5-5% dry weight of sodium bicarbonate;
      - 0.2-3% by weight of citric acid; and
   wherein the plant protein has a median molecular weight comprised in the range of between 800 and 20,000 Daltons and wherein the plant protein has been hydrolysed to an extent of protein hydrolysis comprised in the range of between 5 to 60%.

In another preferred embodiment, the inventions relates to a method of preparing a powdered creamer composition of the invention, the method comprising:
a) preparing an aqueous solution comprising plant protein;
b) emulsifying a vegetable oil in the aqueous solution to obtain an emulsion; and
c) drying the emulsion to obtain a powdered creamer composition;
   wherein carbohydrate,sodium bicarbonate and citric acid are added to the aqueous solution prepared in step a) and/or to the emulsion obtained in step b), before step c); and
   wherein the plant proteins, vegetable oil, carbohydrate and bicarbonate are present in amounts to obtain a powdered creamer composition comprising:
      - 1-8% by weight of plant protein;
      - 12-50% dry weight of vegetable oil;
      - 25-80 % dry weight of carbohydrate;
      - 0.5-5% dry weight of sodium bicarbonate;
      - 0.2-3% by weight of citric acid; and
   wherein the plant protein has a median molecular weight comprised in the range of between 900 and 12,000 Daltons and wherein the plant protein has been hydrolysed to an extent of protein hydrolysis comprised in the range of between 5 to 99%.

In yet another preferred embodiment, the inventions relates to a method of preparing a powdered creamer composition of the invention, the method comprising:
a) preparing an aqueous solution comprising plant protein;
b) emulsifying a vegetable oil in the aqueous solution to obtain an emulsion; and
c) drying the emulsion to obtain a powdered creamer composition;
   wherein carbohydrate,sodium bicarbonate and citric acid are added to the aqueous solution prepared in step a) and/or to the emulsion obtained in step b), before step c); and
   wherein the plant proteins, vegetable oil, carbohydrate and bicarbonate are present in amounts to obtain a powdered creamer composition comprising:
      - 1-8% by weight of plant protein;
      - 12-50% dry weight of vegetable oil;
      - 25-80 % dry weight of carbohydrate;
      - 0.5-5% dry weight of sodium bicarbonate;
      - 0.2-3% by weight of citric acid; and
   wherein the plant protein has a median molecular weight comprised in the range of between 900 and 12,000 Daltons and wherein the plant protein has been hydrolysed to an extent of protein hydrolysis comprised in the range of between 5 to 60%.

### EXAMPLES

### Example 1 - Soy protein creamer

The process started with a mixing process to obtain a concentrate of 40 Kg. The mixing process was composed of two phases: the water mixing and the oil mixing.

The water-mixing phase was performed by adding to 16 Kg of reverse osmosis water, baking soda (sodium bicarbonate), 0.24 Kg and citric acid, 0.11 Kg, under high agitation for 5 minutes at 70°C. Soy protein that has been hydrolysed to an extent of protein hydrolysis of 7.55% , 0.37 Kg, was added and the mixture left under high agitation for 30 minutes to hydrate.

### Measurement of the extent of protein hydrolysis

The extent of protein hydrolysis was determined using the ratio between Non Protein Nitrogen (NPN) and Total Nitrogen (TN), i.e. NPN/TN%.

The NPN fraction was prepared as followed. Plant proteins, in powder format, are dissolved in water into a 50-mL volumetric flask weigh, to the nearest 0.1 mg, a test portion corresponding to 0.02 g nitrogen. For example, for a product with 2.00 g/100 g N, weight 0.02 x 100 / 2.00 = 1.00 g. and dissolve carefully with about 20 mL distilled water at 40 °C. Cool to 20 °C (room temperature).

The dissolved intact proteins are then precipitated by adding 25 mL of a 24 % (W/v) Trichloroacetic Acid solution (TCA) (pH2). Volume was completed to 50ml total with distilled water. The solution was mixed well and allowed to stand for 20 minutes at room temperature. The solution was thereafter filtered through a dry folder filter (S&S 602 Hand ½). The NPN content is then obtained by measuring the nitrogen content according to Kjeldahl method, using a protein factor of 6.25.

The TN fraction was prepared according to standard protocol for measurement of nitrogen in TN fraction using standard Kjeldahl method.

The oil-mixing phase was performed by mixing sunflower lecithin 0.080 Kg to non-hydrogenated palm kernel oil, 5.44 Kg, at 60 °C for 5 minutes.

The oil phase was then incorporated in the water phase under high agitation for 5 minutes. Glucose syrup, 9.7 Kg, was then added to the mix and the final mixture left under high agitation for 5 minutes.

This final mixture was then heated to 81°C for 40 sec, homogenized at 180/50 bar and spray dried to obtain a powder. After that the powder was fed through an after drier and an after cooler before being collected.

The sensorial properties of the creamer reconstituted in hot coffee were judged by trained panellists.

It was surprisingly found that the creamer reconstituted in coffee had good appearance, mouth-feel, smooth texture and a good flavor without "off"-taste. In addition, the creamer showed high whitening capacity when added to a coffee.

It was also surprisingly found that the powder creamer did not curdle or flocculate when added to 150ml of water at 85°C, 330 ppm with 2g soluble coffee (Nescafé Red cup).

### Example 2 (comparative) - Soy protein creamer without baking soda

A powdered creamer was prepared as in Example 1 but without baking soda.

The sensorial properties and stabilities of the creamer reconstituted in coffee were judged by trained panellists. It was found that the powder creamer curdled or flocculated when added to 150 ml of water 85°C, 330 ppm with 2 g soluble coffee (Nescafé Red cup).

### Example 3 (comparative) - Soy protein creamer without baking soda and without citric acid

A powdered creamer was prepared as in Example 1 but without baking soda and citric acid.

The sensorial properties and stabilities of the creamer reconstituted in coffee were judged by trained panellists. It was found that the powder creamer curdled or flocculated when added to 150 ml of water 85°C, 330 ppm with 2 g soluble coffee (Nescafé Red cup).

### Example 4 - Rice protein creamers

A powdered creamer was prepared as in Example 1 but using rice proteins instead of soy proteins. The quantity of rice protein that has been hydrolysed to an extent of protein hydrolysis of 52.89% used was 0.53 Kg, the quantity of baking soda was 0.29 kg and the quantity of citric acid was 0.15 kg. The rice protein after being added to the water-mixing phase was left under high agitation for 30 minutes for hydration.

The sensorial properties and stabilities of the creamer reconstituted in coffee were judged by trained panellists.

It was surprisingly found that the creamer reconstituted in coffee had good appearance, mouth-feel, smooth texture and a good flavor without "off"-taste. In addition, the creamer showed high whitening capacity when added to a coffee.

It was also surprisingly found that the powder creamer did not curdle or flocculate when added to 150ml of water at 85°C, 330 ppm with 2g soluble coffee (Nescafé Red cup).

A second variant of powdered creamer comprising rice protein was prepared as in Example 1 but using rice a proteins that has been hydrolysed to an extent of protein hydrolysis of 97% instead of soy proteins. The quantity of rice protein used was 0.45 Kg, the quantity of baking soda was 0.29 kg and the quantity of citric acid was 0.15 kg. The rice protein after being added to the water-mixing phase was left under high agitation for 30 minutes for hydration.

The sensorial properties and stabilities of the creamer reconstituted in coffee were judged by trained panellists. The creamer reconstituted in coffee had good appearance, mouth-feel, smooth texture and a good flavor without "off'-taste.

It was surprisingly found that the powder creamer did not curdle or flocculate when added to 150m1 of water at 85°C, 330 ppm with 2g soluble coffee (Nescafé Red cup).

### Example 5 - Pea protein creamer

A powdered creamer was prepared as in Example 1 but using pea proteins instead of soy proteins. The quantity of pea protein having that has been hydrolysed to an extent of protein hydrolysis of 14.34% used was 0.42 Kg, the quantity of baking soda was 0.29 kg and the quantity of citric acid was 0.15 kg. The pea protein after being added to the water-mixing phase was left under high agitation for 30 minutes for hydration.

The sensorial properties and stabilities of the creamer reconstituted in coffee were judged by trained panellists. The creamer reconstituted in coffee had good appearance, mouth-feel, smooth texture and a good flavor without "off"-taste. In addition, the creamer showed high whitening capacity when added to a coffee.

It was surprisingly found that the powder creamer did not curdle or flocculate when added to 150m1 of water at 85°C, 330 ppm with 2g soluble coffee (Nescafé Red cup).

### Example 6 - Impact of the median molecular weight distribution on creamer performance

Powdered creamers were prepared as per Example 1 using either soy protein that has been hydrolysed to an extent of protein hydrolysis of 7.55% (Sample A1) or a soy protein that has been hydrolysed to an extent of protein hydrolysis of 1.83% (Sample A2) as an alternative source of soy protein.

Powdered creamers were prepared as per Example 4 using either rice protein that has been hydrolysed to an extent of protein hydrolysis of 52.89% (Sample B1) or rice protein that has been hydrolysed to an extent of protein hydrolysis of 1.02% (Sample B2) as an alternative source of rice protein.

Powdered creamers were prepared as per Example 5 using either pea protein that has been hydrolysed to an extent of protein hydrolysis of 14.34% (Sample C1) or pea protein that has been hydrolysed to an extent of protein hydrolysis of 3.23% (Sample C2) as alternative source of pea protein.

The molecular weight distribution for each sample was determined by measuring the peptides size of the protein hydrolysates using size exclusion HPLC under conditions known in the art. The median molecular weight of the protein hydrolysates is defined as the value separating the higher half from the lower half of the molecular weight values in the data sample.

Each powdered creamer sample were reconstituted in coffee by mixing 6g of powdered creamer with 2g of soluble coffee in a cup and adding in 150 ml water at 450 ppm/270 ppm at 85°C. The stability of the creamers was evaluated by measuring the flocculation. Measurement of no flocculation, curdling, clumping and aggregation of the creamer after reconstitution in coffee indicates a good performance of the powdered creamer. In the contrary, measurement of flocculation, curdling, clumping and aggregation of the creamer after reconstitution in coffee indicates a bad performance of the powdered creamer.

Results of the median molecular weight and powdered creamer performance are indicated in Table 1.

**Table 1 Median molecular weight and performance of powdered creamers**

| Sample | A1 | A2 | B1 | B2 | C1 | C2 |
|---|---|---|---|---|---|---|
| Median Molecular weight (Da) | 10'460.7 | 27'657 | 950 | 22'607.7 | 1'794.1 | 30'646.8 |
| Performance | Good | Bad | Good | Bad | Good | Bad |

The inventors have found that the performance of the powdered creamer, meaning its ability of stabilizing the emulsion, is linked with the median molecular weight. If the plant protein have a too high or a too low median molecular weight, then the performance of the powdered creamer are impaired and flocculation is observed. It therefore confirmed that not every plant proteins, either in its native structure or partially hydrolysed, would be able to stabilize effectively an emulsion.

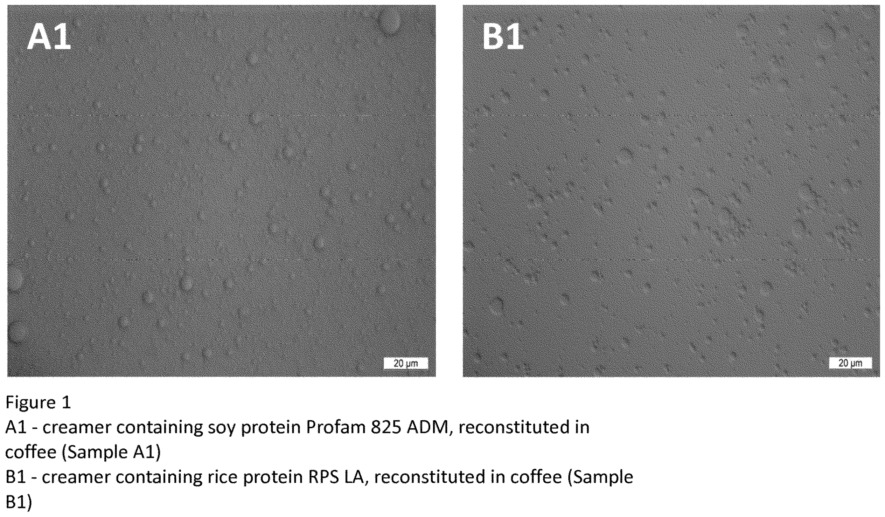

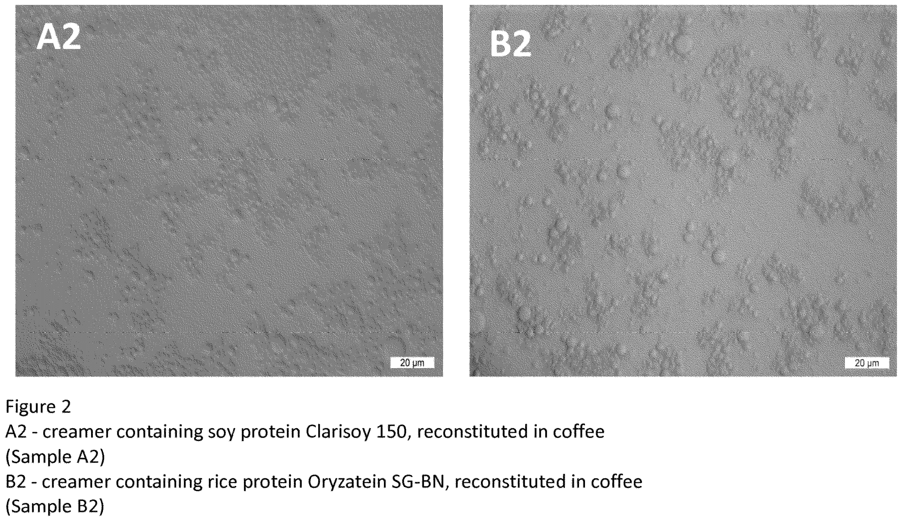

Figures 1 and 2 further illustrate the improved emulsifying properties of the powdered creamer according to the present invention.

Direct visualization of emulsion using Microscopy DIC (Differential Interference Contrast) using LEICA DMR coupled with DFC495 (Objective: 40x, lens: 1.6x) shows an homogenous distribution of well-defined fat droplets in Samples A1 and B1, which has good performance (see Figure 1). In the contrary, the fat droplets in Samples A2 and B2, which have bad performance, are aggregated (Figure 2).

These observations further confirmed that a specific range of median molecular weight is required to have efficient stabilization of the oil droplets, thereby avoiding flocculation.

## Claims

1. A powdered creamer composition comprising:
- 1-8% by weight of plant protein;
- 12-50% by weight of vegetable oil;
- 25-80 % by weight of carbohydrate;
- 0.5-5% by weight of sodium bicarbonate;
- 0.2-3% by weight of citric acid; and
wherein the plant protein has a median molecular weight comprised in the range of between 800 and 20,000 Daltons.

2. A powdered creamer composition according to claim 1, wherein the plant protein has been hydrolysed to an extent of protein hydrolysis comprised in the range of between 5% and 99%.

3. A powdered creamer composition according to claims 1 or 2 further comprising 1-7% by weight of calcium carbonate.

4. A powdered creamer composition according to any one of the preceding claims, wherein the citric acid is, totally or in part, in the form of lemon juice.

5. A powdered creamer composition according to any one of the preceding claims, wherein the carbohydrate is, totally or in part, in the form of sugar.

6. A powdered creamer composition according to claim 5, wherein the sugar is selected from sucrose, fructose, lactose, glucose syrup, corn syrup, rice syrup, tapioca syrup, maple syrup, agave syrup, honey, dextrin, oligosaccharides, and combinations thereof.

7. A powdered creamer composition according to any one of the preceding claims, wherein the protein, carbohydrate and/or vegetable oil is, totally or in part, in the form of vegetable flour and/or in the form of milled or crushed plant parts.

8. A powdered creamer composition according to any one of the preceding claims, wherein the powdered creamer composition is substantially devoid of milk protein.

9. A powdered creamer composition according to any one of the preceding claims, wherein the plant protein is selected from soy protein, rice protein, pea protein, chickpea protein, potato protein, canola protein, hemp protein, oat protein, flaxseed protein, faba bean protein, lentil protein, and combinations thereof.

10. A powdered creamer composition according to any one of the preceding claims, further comprising one or more emulsifiers.

11. A powdered creamer composition according to any one of the preceding claims, wherein the creamer composition is devoid of added phosphates.

12. A powdered coffee or tea beverage composition comprising soluble coffee or tea and a powdered creamer composition according to any of the preceding claims.

13. A beverage capsule for a beverage preparation apparatus, the beverage capsule comprising the powdered creamer composition of any one of claims 1-10, or the powdered coffee or tea beverage composition of claim 11.

14. A method of preparing a powdered creamer composition, the method comprising:
a) preparing an aqueous solution comprising plant protein;
b) emulsifying a vegetable oil in the aqueous solution to obtain an emulsion; and
c) drying the emulsion to obtain a powdered creamer composition;
wherein carbohydrate, citric acid and sodium bicarbonate are added to the aqueous solution prepared in step a) and/or to the emulsion obtained in step b), before step c); and
wherein the plant proteins, vegetable oil, carbohydrate, bicarbonate and citric acid are present in amounts to obtain a powdered creamer composition comprising:
- 1-8% by weight of plant protein;
- 12-50% dry weight of vegetable oil;
- 25-80 % dry weight of carbohydrate;
- 0.5-5% dry weight of sodium bicarbonate;
- 0.2-3% by weight of citric acid; and
wherein the plant protein has a median molecular weight comprised in the range of between 800 and 20,000 Dalton .

15. The method of claim 14, wherein the plant protein of step a) has been hydrolysed an extent of protein hydrolysis comprised in the range of between 5 to 99%.

16. The method of claims 14 or 15, wherein calcium carbonate is added to the aqueous solution prepared in step a) and/or to the emulsion obtained in step b), before step c); in an amount to obtain a powdered creamer composition comprising 1-7% by weight of calcium carbonate.

## Patentansprüche

1. Pulverförmige Creamer-Zusammensetzung, umfassend:
- zu 1-8 Gew.-% Pflanzenprotein;
- zu 12-50 Gew.-% Pflanzenöl;
- zu 25-80 Gew.-% Kohlenhydrat;
- zu 0,5-5 Gew.-% Natriumbicarbonat;
- zu 0,2-3 Gew.-% Zitronensäure; und
wobei das Pflanzenprotein ein mittleres Molekulargewicht, das in dem Bereich zwischen 800 und 20.000 Dalton enthalten ist, aufweist.

2. Pulverförmige Creamer-Zusammensetzung nach Anspruch 1, wobei das Pflanzenprotein bis zu einem Proteinhydrolysegrad, der in dem Bereich zwischen 5 % und 99 % enthalten ist, hydrolysiert wurde.

3. Pulverförmige Creamer-Zusammensetzung nach Anspruch 1 oder 2, ferner umfassend zu 1-7 Gew.-% Calciumcarbonat.

4. Pulverförmige Creamer-Zusammensetzung nach einem der vorstehenden Ansprüche, wobei die Zitronensäure ganz oder teilweise in Form von Zitronensaft vorliegt.

5. Pulverförmige Creamer-Zusammensetzung nach einem der vorstehenden Ansprüche, wobei das Kohlenhydrat ganz oder teilweise in Form von Zucker vorliegt.

6. Pulverförmige Creamer-Zusammensetzung nach Anspruch 5, wobei der Zucker aus Saccharose, Fructose, Lactose, Glucosesirup, Maissirup, Reissirup, Tapiokasirup, Ahornsirup, Agavensirup, Honig, Dextrin, Oligosacchariden und Kombinationen davon ausgewählt ist.

7. Pulverförmige Creamer-Zusammensetzung nach einem der vorstehenden Ansprüche, wobei das Protein, das Kohlenhydrat und/oder das Pflanzenöl ganz oder teilweise in Form von Pflanzenmehl und/oder in Form von gemahlenen oder zerkleinerten Pflanzenteilen vorliegt.

8. Pulverförmige Creamer-Zusammensetzung nach einem der vorstehenden Ansprüche, wobei die pulverförmige Creamer-Zusammensetzung im Wesentlichen frei von Milchprotein ist.

9. Pulverförmige Creamer-Zusammensetzung nach einem der vorstehenden Ansprüche, wobei das Pflanzenprotein ausgewählt ist aus Sojaprotein, Reisprotein, Erbsenprotein, Kichererbsenprotein, Kartoffelprotein, Rapsprotein, Hanfprotein, Haferprotein, Leinsamenprotein, Ackerbohnenprotein, Linsenprotein und Kombinationen davon.

10. Pulverförmige Creamer-Zusammensetzung nach einem der vorstehenden Ansprüche, ferner umfassend einen oder mehrere Emulgatoren.

11. Pulverförmige Creamer-Zusammensetzung nach einem der vorstehenden Ansprüche, wobei die Creamer-Zusammensetzung frei von zugesetzten Phosphaten ist.

12. Pulverförmige Kaffee- oder Teegetränkezusammensetzung, umfassend löslichen Kaffee oder Tee und eine pulverförmige Creamer-Zusammensetzung nach einem der vorstehenden Ansprüche.

13. Getränkekapsel für eine Getränkezubereitungseinrichtung, die Getränkekapsel umfassend die pulverförmige Creamer-Zusammensetzung nach einem der Ansprüche 1 bis 10 oder die pulverförmige Kaffee- oder Teegetränkezusammensetzung nach Anspruch 11.

14. Verfahren zum Zubereiten einer pulverförmigen Creamer-Zusammensetzung, das Verfahren umfassend:
a) Zubereiten einer wässrigen Lösung, umfassend Pflanzenprotein;
b) Emulgieren eines Pflanzenöls in der wässrigen Lösung, um eine Emulsion zu erhalten; und
c) Trocknen der Emulsion, um eine pulverförmige Creamer-Zusammensetzung zu erhalten;
wobei Kohlenhydrat, Zitronensäure und Natriumbicarbonat der in Schritt a) hergestellten wässrigen Lösung und/oder der in Schritt b) erhaltenen Emulsion vor Schritt c) zugesetzt werden; und
wobei die Pflanzenproteine, das Pflanzenöl, das Kohlenhydrat, das Bicarbonat und die Zitronensäure in Mengen vorhanden sind, um eine pulverförmige Creamer-Zusammensetzung zu erhalten, umfassend:
- zu 1-8 Gew.-% Pflanzenprotein;
- zu 12-50 Trockengewicht-% Pflanzenöl;
- zu 25-80 Trockengewicht-% Kohlenhydrat;
- zu 0,5-5 Trockengewicht-% Natriumbicarbonat;
- zu 0,2-3 Gew.-% Zitronensäure; und
wobei das Pflanzenprotein ein mittleres Molekulargewicht, das in dem Bereich zwischen 800 und 20.000 Dalton enthalten ist, aufweist.

15. Verfahren nach Anspruch 14, wobei das Pflanzenprotein aus Schritt a) bis zu einem Proteinhydrolysegrad, der in dem Bereich zwischen 5 bis 99 % enthalten ist, hydrolysiert wurde.

16. Verfahren nach Anspruch 14 oder 15, wobei Calciumcarbonat der in Schritt a) hergestellten wässrigen Lösung und/oder der in Schritt b) erhaltenen Emulsion vor Schritt c); in einer Menge, um eine pulverförmige Creamer-Zusammensetzung zu erhalten, umfassend zu 1-7 Gew.-% Calciumcarbonat, zugesetzt wird.

## Revendications

1. Composition de colorant à café en poudre comprenant :
- 1 à 8 % en poids de protéine végétale ;
- 12 à 50 % en poids d'huile végétale ;
- 25 à 80 % en poids d'hydrate de carbone ;
- 0,5 à 5 % en poids de bicarbonate de sodium ;
- 0,2 à 3 % en poids d'acide citrique ; et
dans laquelle la protéine végétale a un poids moléculaire moyen compris entre 800 et 20 000 daltons.

2. Composition de colorant à café en poudre selon la revendication 1, dans laquelle la protéine végétale a été hydrolysée à un degré d'hydrolyse de protéines compris entre 5 % et 99 %.

3. Composition de colorant à café en poudre selon les revendications 1 ou 2, comprenant en outre 1 à 7 % en poids de carbonate de calcium.

4. Composition de colorant à café en poudre selon l'une quelconque des revendications précédentes, dans laquelle l'acide citrique est, totalement ou partiellement, sous forme de jus de citron.

5. Composition de colorant à café en poudre selon l'une quelconque des revendications précédentes, dans laquelle l'hydrate de carbone est, totalement ou partiellement, sous forme de sucre.

6. Composition de colorant à café en poudre selon la revendication 5, dans laquelle le sucre est choisi parmi le saccharose, le fructose, le lactose, le sirop de glucose, le sirop de maïs, le sirop de riz, le sirop de tapioca, le sirop d'érable, le sirop d'agave, le miel, la dextrine, les oligosaccharides et leurs combinaisons.

7. Composition de colorant à café en poudre selon l'une quelconque des revendications précédentes, dans laquelle la protéine, l'hydrate de carbone et/ou l'huile végétale sont, totalement ou partiellement, sous forme de farine végétale et/ou sous forme de parties de plantes moulues ou écrasées.

8. Composition de colorant à café en poudre selon l'une quelconque des revendications précédentes, dans laquelle la composition de colorant à café en poudre est sensiblement dépourvue de protéine de lait.

9. Composition de colorant à café en poudre selon l'une quelconque des revendications précédentes, dans laquelle la protéine végétale est choisie parmi une protéine de soja, une protéine de riz, une protéine de pois, une protéine de pois chiche, une protéine de pomme de terre, une protéine de colza, une protéine de chanvre, une protéine d'avoine, une protéine de graine de lin, une protéine de féverole, une protéine de lentille et leurs combinaisons

10. Composition de colorant à café en poudre selon l'une quelconque des revendications précédentes, comprenant en outre un ou plusieurs émulsifiants.

11. Composition de colorant à café en poudre selon l'une quelconque des revendications précédentes, dans laquelle la composition de colorant à café est dépourvue de phosphates ajoutés.

12. Composition de boisson au café ou au thé en poudre comprenant du café ou du thé soluble et une composition de colorant à café en poudre selon l'une quelconque des revendications précédentes.

13. Capsule de boisson pour un appareil de préparation de boissons, la capsule de boisson comprenant la composition de colorant à café en poudre selon l'une quelconque des revendications 1 à 10, ou la composition de boisson au café ou au thé en poudre selon la revendication 11.

14. Procédé de préparation d'une composition de colorant à café en poudre, le procédé comprenant :
a) la préparation d'une solution aqueuse comprenant une protéine végétale ;
b) l'émulsion d'une huile végétale dans la solution aqueuse pour obtenir une émulsion ; et
c) le séchage de l'émulsion pour obtenir une composition de colorant à café en poudre ;
dans lequel l'hydrate de carbone, l'acide citrique et le bicarbonate de sodium sont ajoutés à la solution aqueuse préparée à l'étape a) et/ou à l'émulsion obtenue à l'étape b), avant l'étape c) ; et
dans lequel les protéines végétales, l'huile végétale, l'hydrate de carbone, le bicarbonate et l'acide citrique sont présents en quantités permettant d'obtenir une composition de colorant à café en poudre comprenant :
- 1 à 8 % en poids de protéine végétale ;
- 12 à 50 % en poids sec d'huile végétale ;
- 25 à 80 % en poids sec d'hydrate de carbone ;
- 0,5 à 5 % en poids sec de bicarbonate de sodium ;
- 0,2 à 3 % en poids d'acide citrique ; et
dans lequel la protéine végétale a un poids moléculaire moyen compris entre 800 et 20 000 daltons.

15. Procédé selon la revendication 14, dans lequel la protéine végétale de l'étape a) a été hydrolysée à un degré d'hydrolyse des protéines compris entre 5 et 99 %.

16. Procédé selon les revendications 14 ou 15, dans lequel le carbonate de calcium est ajouté à la solution aqueuse préparée à l'étape a) et/ou à l'émulsion obtenue à l'étape b), avant l'étape c) ; dans une quantité permettant d'obtenir une composition de colorant à café en poudre comprenant 1 à 7 % en poids de carbonate de calcium.
